# EUROPEAN PATENT APPLICATION

(11) **EP 4 541 917 A1**
(43) Date of publication of application: **23.04.2025**
(21) Application number: 23823243.3
(22) Date of filing: 16.06.2023
(51) Int. Cl.: C22C 38/00, C22C 38/02, C22C 38/04, C22C 38/06, C22C 38/12, C22C 38/14, C22C 38/16, C22C 38/18, C22C 38/38, C21D 8/00, C21D 8/02, C21D 1/26, C23C 2/00, C23C 2/06

(54) **HYDROGEN INDUCED CRACKING-RESISTANT COLD-ROLLED HOT-DIP GALVANIZED ULTRA-HIGH-STRENGTH DUAL-PHASE STEEL AND MANUFACTURING METHOD THEREFOR**

(30) Priority: 17.06.2022 CN 202210690328
(71) Applicant: BAOSHAN IRON & STEEL CO., LTD., Shanghai 201900 (CN)
(72) Inventor: WANG, Junfeng, Shanghai 201900 (CN); ZHU, Xiaodong, Shanghai 201900 (CN); ZHENG, Tao, Shanghai 201900 (CN); WU, Zhangwei, Shanghai 201900 (CN)
(74) Representative: Kuhnen & Wacker Patent- und Rechtsanwaltsbüro PartG mbB
(86) International application number: PCT/CN2023/100602
(87) International publication number: WO 2023/241677

(57) **Abstract**

A hydrogen induced cracking-resistant cold-rolled hot-dip galvanized ultra-high-strength dual-phase steel, comprising a substrate and a galvanized layer plated on the substrate, wherein the substrate contains Fe and inevitable impurity elements, and the substrate further contains the following chemical elements in percentage by mass: 0.1-0.18% of C, 2.2-3.0% of Mn, 0.2-0.6% of Si, 0.03-0.3% of Al, 0.01-0.1% of Nb, 0.01-0.1% of Ti, 0.04-0.2% of Mo, and 0.0005-0.003% of B. The matrixes of the microstructure of the substrate are ferrite and martensite, the microstructure of the substrate further comprises a carbide precipitation phase having a size less than 100 nm, and the carbide particles and the matrixes are in a coherent or semi-coherent state. A manufacturing method for the dual-phase steel comprises the following steps: (1) smelting and casting; (2) hot rolling; (3) acid pickling; (4) cold rolling; (5) hot-dip galvanizing and recrystallization annealing; and (6) cooling after galvanizing.

## Description

### Technical field

The present disclosure relates to a steel material and a manufacturing method thereof, in particular to an ultra-high-strength dual phase steel and a manufacturing method thereof.

### Background Art

In recent years, with the rapid development of the automobile industry, the steel used in the automotive body-in-white has also undergone rapid iteration, and the proportion of an ultra-high-strength steel in the automotive field has increased significantly.

In comparison with conventional high-strength steel, when the strength of an ultra-high-strength steel reaches 980MPa or more, the risk of hydrogen-induced delayed cracking will be significantly increased, and the safety of the vehicle body will be seriously endangered. Especially when the tensile strength reaches 1180MPa or more, the critical hydrogen content of hydrogen-induced cracking is very low. In addition, in order to meet the requirements of corrosion resistance, the surface of the steel plate is usually coated with a zinc layer, and the presence of the zinc layer inhibits the overflow of diffused hydrogen, and the risk of hydrogen-induced cracking for a galvanized ultra-high-strength steel is higher. Therefore, it is the focus of future research and development to develope an ultra-high-strength steel that meets the user's corrosion resistance requirements while avoiding the risk of hydrogen-induced cracking, however, there are few reports and patents about this type of steel.

For example, the Chinese patent document with the publication number of CN1990894A, published on July 4, 2007, and titled "ultra-high-strength steel plate with excellent hydrogen embrittlement resistance", discloses an ultra-high-strength steel sheet with excellent hydrogen embrittlement resistance and a manufacturing method thereof, wherein its typical composition is (0.1~0.3)C-(1~3.5)Mn-(1~3)Si, which can make the material have high delayed cracking resistance when the tensile strength reaches 1180MPa grade. However, in this technical solution, a high C and Si design is adopted, which is not conducive to the spot-welding performance of a galvanized ultra-high-strength steel. At the same time, when preparing the steel, the annealing temperature used is relatively high, which is greater than the A3 temperature, and the process path has high requirements for the unit conditions, and does not conform to the low-carbon design concept.

For another example, the Chinese patent document with the publication number of CN102449180A, published on May 9, 2012, and titled "high-strength steel plate with excellent hydrogen embrittlement resistance", discloses a high-strength steel plate with excellent hydrogen embrittlement resistance, and its typical composition is (0.15~0.25)C-(1.5~3)Mn-(1~2.5)Si, which can make the material have high molding performance when the tensile strength reaches 1180MPa grade through quenching-tempering process. However, in this technical solution, it adopts a high C and Si design, which is not conducive to the spot-welding performance and manufacturability of a galvanized ultra-high-strength steel. At the same time, in the preparation of steel, the required quenching-tempering process path and high annealing temperature have higher requirements for the unit conditions and equipment, which is not conducive to product expansion.

Therefore, in order to meet the needs of the market and users, it is urgent to develop a new cold-rolled hot-dip galvanized ultra-high-strength dual phase steel resistant to hydrogen-induced cracking on the basis of ensuring the manufacturability, production cost and excellent welding performance of a cold-rolled hot-dip galvanized dual phase steel through the traditional dual phase (DP) process.

### Summary

One of the objects of the present disclosure is to provide a hydrogen-induced cracking resistant cold-rolled hot-dip galvanized ultra-high-strength dual phase steel. The hydrogen-induced cracking resistant cold-rolled hot-dip galvanized ultra-high-strength dual phase steel can ensure ultra-high strength while obtaining very excellent manufacturability, formability, weldability and hydrogen-induced cracking resistance through reasonable composition matching and process design. It has a yield strength of ≥ 800MPa, a tensile strength of ≥ 1180MPa, an elongation A₅₀ of ≥6%, a diffused hydrogen content of ≤ 0.2ppm and has a very good application prospect.

In order to achieve the above purpose, the present disclosure provides a hydrogen-induced crack-resistant cold-rolled hot-dip galvanized ultra-high-strength dual phase steel, which comprises a substrate and a galvanized layer coated on the substrate, wherein the substrate comprises Fe and unavoidable impurity elements, and the substrate further comprises the following chemical elements in percentages by mass:
C: 0.1~0.18%, Mn: 2.2~3.0%, Si: 0.2~0.6%, Al: 0.03~0.3%, Nb: 0.01~0.1%, Ti: 0.01~0.1%, Mo: 0.04~0.2%, B: 0.0005~0.003%;
wherein the matrix of the microstructure of the substrate is ferrite + martensite, and its microstructure further comprises a carbide precipitate phase with a size of less than 100nm. In the present disclosure, the size of the carbide precipitate phase refers to its particle size.

In the present disclosure, the hydrogen-induced cracking resistant cold-rolled hot-dip galvanized ultra-high-strength dual phase steel is referred to as cold-rolled hot-dip galvanized dual phase steel for short.

Further, in the hydrogen-induced crack-resistant cold-rolled hot-dip galvanized ultra-high-strength dual phase steel described in the present disclosure, the percentage by mass of each chemical element of the substrate is:
C: 0.1~0.18%, Mn: 2.2~3.0%, Si: 0.2~0.6%, Al: 0.03~0.3%, Nb: 0.01~0.1%, Ti: 0.01~0.1%, Mo: 0.04~0.2%, B: 0.0005~0.003%; with a balance of Fe and unavoidable impurity elements.

In one or more embodiments, the mass percentage of C element in the hydrogen-induced crack-resistant cold-rolled hot-dip galvanized ultra-high-strength dual phase steel is 0.1%, 0.11%, 0.12%, 0.13%, 0.14%, 0.15%, 0.16%, 0.17%, 0.18% or within the range of any two of the foregoing values.

In one or more embodiments, the mass percentage of Mn element in the hydrogen-induced crack-resistant cold-rolled hot-dip galvanized ultra-high-strength dual phase steel is 2.2%, 2.3%, 2.4%, 2.5%, 2.6%, 2.7%, 2.8%, 2.9%, 3.0% or within the range of any two of the foregoing values.

In one or more embodiments, the mass percentage of Si element in the hydrogen-induced crack-resistant cold-rolled hot-dip galvanized ultra-high-strength dual phase steel is 0.2%, 0.25%, 0.3%, 0.35%, 0.4%, 0.45%, 0.5%, 0.55%, 0.6% or within the range of any two of the foregoing values.

In one or more embodiments, the mass percentage of Al element in the hydrogen-induced crack-resistant cold-rolled hot-dip galvanized ultra-high-strength dual phase steel is 0.03%, 0.05%, 0.1%, 0.15%, 0.2%, 0.25%, 0.3% or within the range of any two of the foregoing values.

In one or more embodiments, the mass percentage of Nb element in the hydrogen-induced crack-resistant cold-rolled hot-dip galvanized ultra-high-strength dual phase steel is 0.01%, 0.02%, 0.03%, 0.04%, 0.05%, 0.06%, 0.07%, 0.08%, 0.09%, 0.1% or within the range of any two of the foregoing values.

In one or more embodiments, the mass percentage of Ti element in the hydrogen-induced crack-resistant cold-rolled hot-dip galvanized ultra-high-strength dual phase steel is 0.01%, 0.02%, 0.03%, 0.04%, 0.05%, 0.06%, 0.07%, 0.08%, 0.09%, 0.1% or within the range of any two of the foregoing values.

In one or more embodiments, the mass percentage of Mo element in the hydrogen-induced crack-resistant cold-rolled hot-dip galvanized ultra-high-strength dual phase steel is 0.04%, 0.06%, 0.08%, 0.1%, 0.12%, 0.14%, 0.16%, 0.18%, 0.2% or within the range of any two of the foregoing values.

In one or more embodiments, the mass percentage of B element in the hydrogen-induced crack-resistant cold-rolled hot-dip galvanized ultra-high-strength dual phase steel is 0.0005%, 0.001%, 0.0015%, 0.002%, 0.0025%, 0.003% or within the range of any two of the foregoing values.

In one or more embodiments, the carbide precipitate phase has a size of 5 nm, 10 nm, 15 nm, 20 nm, 30 nm, 40 nm, 50 nm, 60 nm, 70 nm, 80 nm, 90 nm, 100 nm, or within any two of the foregoing values.

In the present disclosure, the hydrogen-induced crack-resistant cold-rolled hot-dip galvanized ultra-high-strength dual phase steel can further introduce the precipitation strengthening phase, namely the nano-scale carbide precipitate phase, into the ferrite and martensite structure of the traditional dual phase steel through reasonable composition matching and process design. The carbide precipitate phase can not only improve the strength of the steel, but also act as a strong hydrogen trap to fix diffused hydrogen, which is beneficial to improving the delayed cracking of the steel.

In the hydrogen-induced crack-resistant cold-rolled hot-dip galvanized ultra-high-strength dual phase steel described in the present disclosure, the design principle of each chemical element is described as follows:
C: In the hydrogen-induced crack-resistant cold-rolled hot-dip galvanized ultra-high-strength dual phase steel described in the present disclosure, C is an important component element in the hot-dip galvanized dual phase steel, which affects the strength and plasticity of the galvanized plate. When the content of C element in the steel is too low, the austenite content formed during annealing in the critical zone will decrease, and the austenite stability and martensite hardenability will decrease, so that it is difficult to ensure the strength and plasticity of the steel. The content of C element in the steel should not be too high. When the content of C element in the steel is too high, the plasticity and weldability of the dual phase steel will decrease. Therefore, considering the influence of C element content on the properties of steel, in the hydrogen-induced cracking resistant cold-rolled hot-dip galvanized ultra-high-strength dual phase steel described in the present disclosure, the mass percentage of C element is controlled between 0.1% and 0.18%.
Mn: In the hydrogen-induced crack-resistant cold-rolled hot-dip galvanized ultra-high-strength dual phase steel described in the present disclosure, the Mn element can improve the austenite stability, shift the C curve to the right, and thereby reduce the critical cooling rate of martensite. The content of Mn in the steel should not be too low. When the Mn content is too low, the hardenability of the steel will be reduced, and the strengthening effect will be weakened; at the same time, excessive Mn should not be added to the steel. When the content of Mn in the steel is too high, it will affect the weldability of the substrate and the quality of surface galvanization, and at the same time weaken the grain boundaries and increase the risk of hydrogen-induced cracking of the material. Therefore, considering the influence of Mn element content on the properties of steel, the mass percentage of Mn element is controlled between 2.2% and 3.0% in the hydrogen-induced cracking resistant cold-rolled hot-dip galvanized ultra-high-strength dual phase steel described in the present disclosure.
Si: In the hydrogen-induced cracking resistant cold-rolled hot-dip galvanized ultra-high-strength dual phase steel described in the present disclosure, Si is a ferrite solid solution strengthening element, which can strongly improve the strength of the steel plate. At the same time, Si can also promote the enrichment of C atoms from ferrite to austenite, purify ferrite, inhibit the precipitation of cementite and ε-carbide, and improve austenite stability. However, it should be noted that the Si content in the steel should not be too high, and an excessively high Si content will directly affect the plateability and spot welding performance of the substrate. Therefore, in order to exert the beneficial effect of Si element, the content of Si element in the steel must be strictly controlled, and the mass percentage of Si element is controlled between 0.2% and 0.6% in the hydrogen-induced cracking resistant cold-rolled hot-dip galvanized ultra-high-strength dual phase steel described in the present disclosure.
Al: In the hydrogen-induced cracking resistant cold-rolled hot-dip galvanized ultra-high-strength dual phase steel described in the present disclosure, Al element acts similarly to Si element, which can effectively inhibit the precipitation of carbide and promote the diffusion of carbon element to austenite, however, Al element cannot inhibit the precipitation of ε-carbide. In the present disclosure, Al element can also increase the stacking fault energy of austenite, and effectively inhibit the weakening of grain boundaries caused by stress concentration and hydrogen enrichment. At the same time, Al can also form a dense alumina protective layer on the surface to inhibit the penetration of hydrogen and improve the anti-hydrogen embrittlement performance of the material. In addition, the addition of Al to the steel can also refine the grain by forming AIN, pinning grain boundaries.

It should be noted that the content of Al in the steel should not be too high, and an excessively high Al content tends to cause problems such as nozzle blockage and significant increase of Ac₃ in the continuous casting process. Therefore, in order to exert the beneficial effect of Al element, the content of Al element in the steel must be strictly controlled, and in the present disclosure, the mass percentage of Al element is controlled between 0.03% and 0.3%.

Nb: In the hydrogen-induced cracking resistant cold-rolled hot-dip galvanized ultra-high-strength dual phase steel described in the present disclosure, Nb can strongly inhibit dynamic recrystallization, and it forms Nb(C, N) by combining with C and N, which can effectively inhibit the grain coarsening during the thermal processing, refine the grain, and strengthen the boundary strength. In addition, like Ti element, the precipitate of Nb is beneficial to increasing the grain boundary area, which is conducive to reducing the diffused hydrogen content per unit area, and can also help reduce the risk of delayed cracking of the steel plate by fixing the diffused hydrogen atom. However, the content of Nb in the steel should not be too high, and adding too much Nb will deteriorate the hot processing properties of steel and the toughness of steel plate. Based on this, in order to exert the beneficial effect of Nb element, the mass percentage of Nb element is controlled between 0.01% and 0.1 % in the hydrogen-induced crack-resistant cold-rolled hot-dip galvanized ultra-high-strength dual phase steel described in the present disclosure.

Ti: In the hydrogen-induced crack-resistant cold-rolled hot-dip galvanized ultra-high-strength dual phase steel described in the present disclosure, Ti is combined with C and N to form Ti (C, N), TiN and TiC, which can refine the as-cast microstructure, hinder grain coarsening during the thermal processing, and strengthen grain boundaries, and at the same time refine grains to increase grain boundary area, which is conducive to reducing the diffused hydrogen content per unit area. In addition, the precipitates of Ti are beneficial to fixing the diffused hydrogen atoms and avoiding the local accumulation of diffused hydrogen, which is beneficial to improving the delayed cracking of steel. However, it should be noted that the content of Ti element in the steel should not be too high, and the addition of excessive Ti will increase the cost, and increase the content and size of the above-mentioned precipitates, thereby reducing the ductility of the steel plate. Therefore, considering the beneficial effect of Ti element, in the hydrogen-induced cracking resistant cold-rolled hot-dip galvanized ultra-high-strength dual phase steel described in the present disclosure, the mass percentage of Ti element needs to be controlled between 0.01% and 0.1%.

Mo: In the hydrogen-induced crack-resistant cold-rolled hot-dip galvanized ultra-high-strength dual phase steel described in the present disclosure, the Mo element can shift the pearlite and bainite C curves to the right, thereby improving the hardenability of the steel; at the same time, Mo can significantly improve the strength of the steel without affecting the quality of the surface galvanizing. In addition, the strengthening effect of Mo on grain boundaries also further improves the hydrogen-induced cracking resistance of the steel plate, and the fine diffuse precipitate phase of Mo can reduce the content of diffused hydrogen and avoid the accumulation of diffused hydrogen. Therefore, in the hydrogen-induced crack-resistant cold-rolled hot-dip galvanized ultra-high-strength dual phase steel described in the present disclosure, considering the high price of Mo, the mass percentage of the Mo element is controlled between 0.04% and 0.2%.

B: In the hydrogen-induced crack-resistant cold-rolled hot-dip galvanized ultra-high-strength dual phase steel described in the present disclosure, B element can effectively hinder the recrystallization of the steel in the hot-rolling process, which is conducive to the refinement of the microstructure caused by the cumulative deformation. However, it should be noted that the content of B element in the steel should not be too high, and adding too much B will generate BC and reduce the ductility of the steel. Therefore, in the hydrogen-induced crack-resistant cold-rolled hot-dip galvanized ultra-high-strength dual phase steel described in the present disclosure, the mass percentage of element B is controlled between 0.0005% and 0.003%.

Further, in the hydrogen-induced cracking-resistant cold-rolled hot-dip galvanized ultra-high-strength dual phase steel described in the present disclosure, the chemical elements of the substrate optionally or preferably may also include at least one of the following elements in percentages by mass: V: 0.005~0.2%, Cr: 0.01~0.8%, Cu: 0.003~0.5%.

Further, in the hydrogen-induced crack-resistant cold-rolled hot-dip galvanized ultra-high-strength dual phase steel described in the present disclosure, the mass percentage of each chemical element of the substrate is:
C: 0.1 ~0.18%, Mn: 2.2~3.0%, Si: 0.2~0.6%, Al: 0.03~0.3%, Nb: 0.01 ~0.1 %, Ti: 0.01~0.1%, Mo: 0.04~0.2%, B: 0.0005~0.003%, and optionally or preferably at least one of V: 0.005~0.2%, Cr: 0.01-0.8% and Cu: 0.003~0.5%; with a balance of Fe and unavoidable impurities.

In one or more embodiments, when V is present, the mass percentage of V element in the hydrogen-induced crack-resistant cold-rolled hot-dip galvanized ultra-high-strength dual phase steel is 0.005%, 0.01%, 0.02%, 0.05%, 0.07%, 0.1%, 0.2% or within the range of any two of the foregoing values.

In one or more embodiments, when Cr is present, the mass percentage of Cr element in the hydrogen-induced cracking-resistant cold-rolled hot-dip galvanized ultra-high-strength dual phase steel is 0.01%, 0.05%, 0.1%, 0.2%, 0.3%, 0.4%, 0.5%, 0.6%, 0.7%, 0.8% or within the range of any two of the foregoing values.

In one or more embodiments, when Cu is present, the mass percentage of Cu element in the hydrogen-induced crack-resistant cold-rolled hot-dip galvanized ultra-high-strength dual phase steel is 0.003%, 0.005%, 0.1%, 0.2%, 0.3%, 0.4%, 0.5% or within the range of any two of the foregoing values.

In order to further optimize the properties of hydrogen-induced cracking resistant cold-rolled hot-dip galvanized ultra-high-strength dual phase steel as described in the present disclosure, V, Cr, Cu elements can be further added to the steel in some preferred embodiments.

V: In the present disclosure, V mainly exists in the form of VC in hot-dip galvanized dual phase steel, and it improves the strength and toughness of the steel by refinement of grains caused by pinning grain boundaries and diffusion precipitation strengthening in ferrite; at the same time, the improvement mechanism of carbides of element V on delayed cracking is the same as that of Nb and Ti. However, it should be noted that the further addition of V will increase the alloy cost of the steel, therefore, in the present disclosure, the mass percentage of V element is limited to between 0.005% and 0.2%.

Cr: in the present disclosure, the Cr element can refine the grain structure and inhibit the grain coarsening during the thermal processing, and Cr is a ferrite-forming element, which can promote the diffusion of C to austenite, improve the stability of austenite, and reduce the critical cooling rate during annealing; at the same time, the addition of Cr can cause the fine and diffuse precipitation of carbides in the steel, forming an effective hydrogen trap and reducing the risk of delayed cracking. However, it should be noted that the Cr content in the steel should not be too high, as an overly high Cr content will destroy the ductility and surface plateability of the steel. Therefore, in the present disclosure, the mass percentage of Cr element is controlled between 0.01% and 0.8%.

Cu: In the present disclosure, Cu can significantly improve the stability of austenite, shift the bainite C curve to the right, improve hardenability, and thereby reduce the critical cooling rate of martensite. At the same time, Cu can also strengthen the matrix by precipitating nanoprecipitate phases. In addition, Cu can also be used as a hydrogen trap to effectively pin diffused hydrogen, reducing the risk of delayed cracking of the material. However, it should be noted that the content of Cu in steel should not be too high. When the content of Cu in the steel is too high, copper embrittlement is prone to occur during thermal processing. Therefore, in the present disclosure, the mass percentage of Cu element is controlled between 0.003% and 0.5%.

Further, in the hydrogen-induced crack-resistant cold-rolled hot-dip galvanized ultra-high-strength dual phase steel described in the present disclosure, the mass percentage of Si, Al, Mo and Cr in the substrate satisfies Si + Al + Cr + Mo≤1.0%.

In one or more embodiments, in the hydrogen-induced crack-resistant cold-rolled hot-dip galvanized ultra-high-strength dual phase steel of the present disclosure, the mass percentage of Si, Al, Mo and Cr in the substrate satisfies: Si + Al + Cr + Mo is 0.5%, 0.6%, 0.7%, 0.8%, 0.9%, 1.0% or in the range of any two of the forgoing values.

In the above-mentioned technical solution of the present disclosure, the present disclosure can further control the element ratio in the steel while controlling the mass percentage of a single chemical element, and make the mass percentages of Si, Al, Mo and Cr satisfy: Si + Al + Cr + Mo ≤ 1.0%. By controlling Si+Al+Cr+Mo ≤1.0%, it is possible to ensure that the steel plate has good manufacturability and sufficient hydrogen traps, so as to ensure both the manufacturability and delayed cracking resistance.

Further, in the hydrogen-induced cracking resistant cold-rolled hot-dip galvanized ultra-high-strength dual phase steel described in the present disclosure, in the unavoidable impurities of the substrate: P is ≤0.02%, S is ≤0.01%, and N is ≤0.008%.

In the hydrogen-induced cracking resistant cold-rolled hot-dip galvanized ultra-high-strength dual phase steel described in the present disclosure, P element, S element and N element are impurity elements in the substrate, and if the technical conditions permit, in order to obtain the plate with better performance and better quality, the content of impurity elements in the steel plate should be reduced as much as possible.

In the present disclosure, because the weakening effect of impurity elements on grain boundaries improves the sensitivity to hydrogen embrittlement, overly high P, S contents in the steel will lead to the increase of grain boundary segregation and grain boundary embrittlement, which is not conducive to the anti-hydrogen embrittlement performance of the material, so the mass percentages of impurity elements P, S, N in the steel must be strictly controlled, and controlled as P≤0.02%, S≤0.01%, N≤0.008%. A purer steel results in a better effect.

In one or more embodiments, in the hydrogen-induced cracking resistant cold-rolled hot-dip galvanized ultra-high-strength dual phase steel described in the present disclosure, the mass percentage of P element is 0.001-0.02%, the mass percentage of S element is 0.001-0.01 %, and the mass percentage of N element is 0.001-0.008%.

Of course, in some preferred embodiments, in order to obtain better implementation effects, it is preferred to control P≤0.01%, S≤0.006%, and N≤0.005%.

Further, in the hydrogen-induced crack-resistant cold-rolled hot-dip galvanized ultra-high-strength dual phase steel of the present disclosure, the carbide precipitate phase is in a co-lattice or semi-lattice state with the matrix.

Further, in the hydrogen-induced crack-resistant cold-rolled hot-dip galvanized ultra-high-strength dual phase steel of the present disclosure, the volume phase fraction of ferrite in the microstructure of the substrate is 10~40%, such as 15%, 20%, 25%, 30%, 35%.

Further, in the hydrogen-induced crack-resistant cold-rolled hot-dip galvanized ultra-high-strength dual phase steel described in the present disclosure, the thickness of the galvanized layer on one side of the substrate is 5~200µm, such as 10µm, 25µm, 35µm, 50µm, 75µm, 100µm, 120µm, 130µm, 150µm.

Further, in the hydrogen-induced cracking resistant cold-rolled hot-dip galvanized ultra-high-strength dual phase steel described in the present disclosure, it is characterized in that, it has a yield strength of ≥ 800MPa, a tensile strength of ≥1180MPa, an elongation A50 of ≥6%, and a diffused hydrogen content of ≤0.2ppm.

In one or more embodiments, the yield strength of the hydrogen-induced cracking-resistant cold-rolled hot-dip galvanized ultra-high-strength dual phase steel described in the present disclosure is 800MPa, 850MPa, 900MPa, 950MPa, 1000MPa or within the range of any two of the forgoing values.

In one or more embodiments, the tensile strength of the hydrogen-induced cracking resistant cold-rolled hot-dip galvanized ultra-high-strength dual phase steel described in the present disclosure is 1180MPa, 1190MPa, 1200MPa, 1220MPa, 1240MPa, 1260MPa, 1270MPa or within the range of any two of the forgoing values.

In one or more embodiments, the elongation A₅₀ of the hydrogen-induced cracking resistant cold-rolled hot-dip galvanized ultra-high-strength dual phase steel described in the present disclosure is 6%, 7%, 8%, 9%, 10%, 11%, 12%, 13%, 14% or within the range of any two of the forgoing values.

In one or more embodiments, the diffused hydrogen content of the hydrogen-induced crack-resistant cold-rolled hot-dip galvanized ultra-high-strength dual phase steel described in the present disclosure is 0.01ppm, 0.02ppm, 0.04ppm, 0.06ppm, 0.08ppm, 0.1ppm, 0.2ppm or within the range of any two of the forgoing values.

Correspondingly, another object of the present disclosure is to provide a manufacturing method of the hydrogen-induced cracking resistant cold-rolled hot-dip galvanized ultra-high-strength dual phase steel. The manufacturing method has optimized the annealing process, and the hydrogen-induced cracking cold-rolled hot-dip galvanized ultra-high-strength dual phase steel described in the present disclosure can be effectively prepared, and the hydrogen-induced cracking resistance of the steel is ensured.

In order to achieve the above purpose, the present disclosure provides a manufacturing method of the above-mentioned hydrogen-induced crack-resistant cold-rolled hot-dip galvanized ultra-high-strength dual phase steel, which comprises steps:
(1) smelting and casting;
(2) hot rolling;
(3) pickling;
(4) cold rolling;
(5) hot-dip galvanizing recrystallization annealing:
   (a) the steel plate is heated to a soaking temperature T1 at a heating rate V1 of 1~20 °C/s, and thermally insulated for 30~240s, wherein T1 is > 760 °C;
   (b) the soaked steel plate is cooled to an intermediate temperature T2 at a cooling rate V2 of 2~20 °C/s, wherein T2 = 600~780 °C;
   (c) the steel plate is cooled at a cooling rate V3 of 5~60 °C/s to the galvanizing temperature T3 and thermally insulated for 20~300s, wherein V3 > V2, and the galvanizing temperature is 400~500 °C;
   (d) the steel plate enters the zinc pot for galvanizing;
(6) cooling after galvanizing: after galvanizing, the galvanized steel plate is quickly cooled to ≤200 °C at a rate of ≥10 °C/s, kept in the temperature range of 100~300 °C for 15~100s, and then cooled to room temperature at a cooling rate of ≥5 °C /s.

In the present disclosure, the manufacturing of hydrogen-induced cracking resistant cold-rolled hot-dip galvanized ultra-high-strength dual phase steel described in the present disclosure needs to go through the process of smelting and casting (such as continuous casting), hot-rolling, pickling, cold-rolling, hot-dip galvanizing recrystallization annealing process and cooling after galvanizing. The present disclosure, which adopts the above-mentioned composition design, rolling process and hot-dip galvanizing recrystallization annealing process, can effectively manufacture hydrogen-induced cracking resistant cold-rolled hot-dip galvanized ultra-high-strength dual phase steel. The matrix of the microstructure of the manufactured steel plate is ferrite + martensite, and has a carbide precipitate phase with a size of less than 100nm, and these carbide particles are in a co-lattice or semi-co-lattice state with the matrix.

The present disclosure obtains good strength and plasticity by controlling the relative content of ferrite and martensite, and comprehensively utilizing fine grain strengthening, precipitation strengthening, etc.; at the same time, the anti-delayed cracking performance of the high-strength steel is improved by various control technologies such as increasing the grain boundary strength, reducing the diffused hydrogen content, and avoiding the local accumulation of diffused hydrogen.

In the above-mentioned manufacturing method of the present disclosure, the inventor optimizes the hot-dip galvanizing recrystallization annealing process of step (5), so that after the steel plate is galvanized, the tempering treatment can be carried out flexibly, and the process not only promotes the overflow of diffused hydrogen, but also can increase the number of hydrogen traps by precipitating ε-carbide, greatly reduce the diffusion coefficient of hydrogen in martensite, and improve the anti-delayed cracking performance of the steel plate.

In addition, the present disclosure also utilizes short-term aging treatment (i.e., the process of thermal insulation for 15~100s in the temperature range of 100~300 °C in galvanizing cooling) to promote the overflow of hydrogen, so as to greatly reduce the diffused hydrogen content in the steel plate, so that the steel also has excellent hydrogen embrittlement resistance while having ultra-high strength.

It should be noted that the hot-dip galvanizing annealing process parameters are closely related to the design of steel composition, which determines the relative content of soft phase ferrite and hard phase martensite inside the galvanized sheet, and affects the best matching of the strength and plasticity of the galvanized sheet.

In the present disclosure, the present disclosure adopts a continuous annealing process to thermally treat a cold-rolled steel plate, and the process steps of hot-dip galvanizing recrystallization annealing are shown in the above steps (a)-(d).

In step (a), the cold-rolled steel plate needs to be heated at a heating rate V1 to a soaking temperature T1 and then thermally insulated for a period of time t1, wherein, V1 = 1~20°C/s, such as 2°C/s, 5°C/s, 7°C/s, 8°C/s, 10°C/s, 12°C/s, 15°C/s, 17°C/s, 18°C/s; T1>760°C, e.g. 770°C, 780°C, 790°C, 800°C, 810°C, 820°C, 830°C; and the thermal insulation time is controlled to be t1=30~240s, such as 40s, 60s, 80s, 100s, 120s, 160s, 180s, 200s, 220s. In this process step, if the soaking temperature T1 is lower than 760 °C and the soaking thermal insulation time t1 is shorter than 30s, the matrix structure of cold-rolled galvanized sheet corresponding to the designed composition in the present disclosure is mostly a banded structure, and sufficient austenite or steel plate matrix carbide is not obtained, and it has not been completely dissolved to form austenite particles, wherein, the existence of banded structure will adversely affect the performance of steel such as bending and hold expansion.

In steps (b) and (c), the soaking treated steel plate needs to be cooled slowly to an intermediate temperature T2 at a cooling rate V2, and then immediately cooled to a galvanizing temperature T3 at a fast cooling rate V3, and then thermally insulated for a time period t3.

The selection of the slow cooling rate V2 and the intermediate temperature T2 mainly considers the following factors: promoting the transformation of part of the austenite into ferrite, the austenite at the T2 temperature having a certain degree of hardenability, which can reduce the decomposition at the subsequent galvanizing temperature T3 and ensure that there is a certain amount of martensite and ferrite in the final structure, so that the steel plate can obtain a certain strength and plasticity.

When the intermediate temperature T2 is too high, there will be a large amount of austenite, and the stability of austenite will decrease, and it will be easier to convert into bainite at the subsequent galvanizing temperature T3, which will affect the strength and elongation of the steel. When the intermediate temperature T2 is too low, too much ferrite and less austenite will be formed, and the final amount of the formed martensite is reduced, and there is a risk of insufficient strength. Therefore, based on the chemical element composition designed by the present disclosure, V2 is selected to be 2~20 °C/s, such as 4 °C/s, 6 °C/s, 8 °C/s, 10 °C/s, 12 °C/s, 14 °C/s, 16 °C/s, 18 °C/s; T2 is selected to be 600~780°C, such as 620°C, 640°C, 660°C, 700°C, 720°C, 740°C, 760°C.

Correspondingly, for the composition design of the present disclosure, V3 is selected to be 5~60 °C/s, such as 10 °C/s, 15 °C/s, 20 °C/s, 25 °C/s, 30 °C/s, 35 °C/s, 40 °C/s, 45 °C/s, 50 °C/s, 55 °C/s, and V3 >V2. The selection of the fast cooling rate V3 needs to avoid as little austenite decomposition as possible in the steel plate matrix during the cooling process. When the galvanizing temperature T3 is higher than 500 °C, it will cause austenite decomposition and generate pearlite or carbide-containing microstructure, thereby consuming the austenite content and its carbon content, and reducing the strength of the steel plate; when the galvanizing temperature T3 is lower than 400°C, the bainite ferrite content will be increased and the strong plasticity of galvanized sheet will be reduced.

From the perspective of effectiveness and economy, in order to ensure that the final galvanized sheet obtains the best proportion of ferrite and martensite for strength and plasticity, T3 is 450~500 °C, such as 460 °C, 470 °C, 480 °C, 490 °C; the stabilization time period t3 (i.e., the thermal insulation time at the galvanizing temperature T3) is selected to be 20~300s, such as 30s, 50s, 70s, 90s, 100s, 110s, 120s, 150s, 200s.

Further, in the manufacturing method of the present disclosure, in the step (2), the slab is heated at 1180~1280 °C (e.g., 1200 °C, 1220 °C, 1240 °C, 1260 °C), the thermal insulation time is 0.5~4h (e.g., 1h, 2h, 3h), the final rolling temperature is controlled to be ≥ 850 °C (e.g., 870 °C, 880 °C, 890 °C, 900 °C, 920 °C, 930 °C, 950 °C), the coiling temperature is controlled to be ≤ 700 °C (e.g., 550°C, 570 °C, 580 °C, 600 °C, 620 °C, 640 °C, 660 °C, 680 °C.

Further, in the manufacturing method of the present disclosure, in the step (4), the cold-rolling reduction is controlled to be 30~70%, such as 35%, 40%, 45%, 50%, 55%, 60%, 65%.

Further, in the manufacturing method of the present disclosure, in the step (6), after the galvanizing is completed, the galvanized steel plate is rapidly cooled to ≤200 °C (such as 150 °C, 160 °C, 170 °C, 180 °C, 190°C) at a cooling rate V4 of ≥10 °C /s (such as 20 °C/s, 30 °C, 40 °C, 50 °C), thermally insulated at a thermal insulation temperature T4 of 100~300 °C (such as 150 °C, 180 °C, 200°C, 220 °C, 250 °C, 280 °C), with a thermal insulation time t4 controlled to be 15 ~ 100s (such as 20s, 30s, 40s, 50s, 60s, 70s, 80s, 90s), and then cooled to room temperature at a cooling rate V5 of ≥5 °C/s (such as 10 °C/s, 20 °C/s, 30 °C/s, 40 °C/s, 50 °C/s, 60 °C/s, 70 °C/s, 80 °C/s).

In the current prior art, the galvanized ultra-high-strength dual phase steel with a tensile strength greater than 1180MPa is very prone to delayed cracking, and it has great potential safety hazards. Improving the anti-delayed cracking performance of steel plate is the key to the problem whether 1180MPa ultra-high-strength steel can be applied to the car body in the future.

For the hot-dip galvanized ultra-high-strength steel of the 1180MPa grade, the present disclosure obtains a hot-dip galvanized ultra-high-strength dual phase steel with manufacturability, formability, weldability and hydrogen-induced cracking resistance through the rational application of alloying elements combined with a reasonable manufacturing process.

Compared with the prior art, the hydrogen-induced cracking-resistant cold-rolled hot-dip galvanized ultra-high-strength dual phase steel and manufacturing method thereof of the present disclosure have the following advantages and beneficial effects:
In the present disclosure, when designing the substrate of galvanized plate, the inventor can effectively improve the anti-delayed cracking performance of the ultra-high-strength steel by optimizing the alloying elements, controlling the grain refinement and the distribution of fine diffuse precipitated phases, and using various control techniques such as improving the grain boundary strength, reducing the diffused hydrogen content per unit area, and avoiding the local aggregation of diffused hydrogen. Through reasonable composition matching and process design, the hydrogen-induced cracking resistant cold-rolled hot-dip galvanized ultra-high-strength dual phase steel can further introduce the precipitation strengthening phase, that is, the nanoscale carbide precipitate phase, into the ferrite and martensite structures of the traditional dual phase steel. These carbide precipitate phases can not only improve the strength of steel, but also act as strong hydrogen traps to fix diffused hydrogen, which is conducive to the improvement of delayed cracking.

In addition, the present disclosure also utilizes a short-term aging treatment to promote the overflow of hydrogen, so as to greatly reduce the diffused hydrogen content in the steel plate, so that the steel has ultra-high strength, and also has excellent hydrogen embrittlement resistance at the same time.
(1) The present disclosure has provided a dual phase steel having the characteristics of both formability and weldability by optimizing the chemical composition and manufacturing process design, by controlling the C and Si content in the steel plate, and ensuring a certain phase proportion of ferrite in the microstructure.
(2) in the present disclosure, it can promote the dispersion precipitation of nanoscale carbide particles in the steel, and these carbide particles can not only improve the strength of steel, but also can be used as a strong hydrogen trap to fix diffused hydrogen, which is conducive to improving the anti-delayed cracking performance of steel.
(3) in the present disclosure, by optimizing the hot-dip galvanizing recrystallization annealing process, the steel plate can be flexibly tempered after galvanizing, which not only promotes the overflow of diffused hydrogen, but also increases the number of hydrogen traps by precipitating ε-carbide and greatly reduces the diffusion coefficient of hydrogen in martensite, thereby improving the anti-delayed cracking performance of the steel plate.

To sum up, it can be seen that the hydrogen-induced cracking resistant cold-rolled hot-dip galvanized ultra-high-strength steel provided by the present disclosure can obtain very good strength and plasticity by controlling the relative content of ferrite and martensite, and comprehensively using microstructure control means such as fine grain strengthening and precipitation strengthening.

Meanwhile, the steel has excellent hydrogen-induced cracking resistance while taking into account both a certain manufacturability and formability. The manufacturing of hydrogen-induced cracking resistant cold-rolled hot-dip galvanized ultra-high-strength steel can be completed on the existing conventional hot-dip galvanized high-strength steel production line, without making major adjustments, it can be used to manufacture automotive structural parts, anti-collision parts and other vehicle parts, and has a good application prospect.

### Description of the drawings

Fig. 1 schematically shows the manufacturing method of hydrogen-induced cracking resistant cold-rolled hot-dip galvanized ultra-high-strength steel described in the present disclosure, which is a schematic diagram of a continuous hot-dip galvanizing recrystallization annealing process and the control process of cooling after galvanizing in one embodiment.
Fig. 2 is a metallographic structure photograph of hydrogen-induced cracking resistant cold-rolled hot-dip galvanized ultra-high-strength dual phase steel in Example 1.

### Detailed Description

The hydrogen-induced cracking-resistant cold-rolled hot-dip galvanized ultra-high-strength dual phase steel and its manufacturing method will be further explained and interpreted below in conjunction with the drawings of the description and specific examples, but the explanations and interpretations do not constitute an undue limitation on the technical solution of the present disclosure.

### Example 1-7

The hydrogen-induced cracking-resistant cold-rolled hot-dip galvanized ultra-high-strength dual phase steel of Example 1-7 of the present disclosed was prepared by adopting the following steps:
(1) smelting and casting were carried out according to the mass percentages of chemical elements shown in Table 1;
(2) hot rolling: the obtained slab was hot-rolled, and the slab was heated at 1180~1280 °C, and the insulation time was controlled to be 0.5~4h, the final rolling temperature was controlled to be ≥850 °C, and the hot-rolled plate was coiled at the coiling temperature of ≤700 °C.
(3) pickling: the hot-rolled plate was pickled after hot rolling.
(4) cold rolling: cold rolling deformation was carried out on the pickled hot-rolled plate, and the cold rolling reduction was controlled to be 30~70%.
(5) hot-dip galvanizing recrystallization annealing:
   (a) the steel plate was heated to the soaking temperature T1 at a heating rate V1 of 1~20 °C/s, and thermally insulated for 30~240s, wherein T1 was > 760 °C;
   (b) the soaked steel plate was cooled to the intermediate temperature T2 at a cooling rate V2 of 2~20 °C/s, T2 = 600~780 °C;
   (c) the steel plate was cooled at a cooling rate V3 of 5~60 °C/s to the galvanizing temperature T3 and thermally insulated for 20~300s, and V3 > V2, and the galvanizing temperature was 400~500 °C;
   (d) the steel plate entered the zinc pot for galvanizing.
(6) cooling after galvanizing: after galvanizing, the galvanized steel plate was quickly cooled to ≤200 °C at a rate of ≥10 °C/s, kept in the temperature range of 100~300 °C for 15~100s, and then cooled to room temperature at a cooling rate of ≥5 °C /s. Finally, the corresponding hydrogen-induced cracking resistant cold-rolled hot-dip galvanized ultra-high-strength steel was obtained.

In the present disclosure, the chemical element composition and related process design of hydrogen-induced crack-resistant cold-rolled hot-dip galvanized ultra-high-strength dual phase steel in Example 1-7 of the present disclosure all meet the requirements of the design specification of the present disclosure.

Table 1 lists the mass percentage of each chemical element in the hydrogen-induced crack-resistant cold-rolled hot-dip galvanized ultra-high-strength dual phase steel in Example 1-7.

**Table 1. (wt%, with a balance of Fe and other unavoidable impurities besides P, S, N)**

| No. | Chemical element | | | | | | | | | | | | | | Si+Al+ Cr+Mo |
|---|---|---|---|---|---|---|---|---|---|---|---|---|---|---|---|
| | C | Mn | Si | Al | Nb | Ti | V | Cr | Mo | Cu | B | P | S | N | |
| Ex. 1 | 0.13 | 2.6 | 0.5 | 0.03 | 0.04 | 0.02 | - | - | 0.12 | - | 0.002 | 0.012 | 0.004 | 0.005 | 0.65 |
| Ex. 2 | 0.11 | 2.9 | 0.3 | 0.1 | 0.07 | 0.01 | 0.02 | 0.05 | 0.05 | - | 0.0013 | 0.008 | 0.005 | 0.006 | 0.5 |
| Ex. 3 | 0.14 | 2.7 | 0.25 | 0.1 | 0.01 | 0.07 | - | 0.6 | 0.06 | 0.1 | 0.0006 | 0.013 | 0.007 | 0.006 | 0.96 |
| Ex. 4 | 0.17 | 2.3 | 0.5 | 0.03 | 0.03 | 0.02 | - | 0.35 | 0.1 | - | 0.0017 | 0.01 | 0.006 | 0.004 | 0.98 |
| Ex. 5 | 0.13 | 2.5 | 0.2 | 0.3 | 0.02 | 0.04 | 0.07 | - | 0.15 | 0.4 | 0.001 | 0.015 | 0.005 | 0.005 | 0.65 |
| Ex. 6 | 0.13 | 2.6 | 0.4 | 0.03 | 0.03 | 0.04 | - | 0.4 | 0.08 | - | 0.0025 | 0.009 | 0.004 | 0.006 | 0.91 |
| Ex. 7 | 0.15 | 2.55 | 0.35 | 0.03 | 0.02 | 0.02 | 0.02 | 0.3 | 0.1 | - | 0.0015 | 0.007 | 0.006 | 0.005 | 0.78 |

Tables 2-1 and 2-2 list the specific process parameters used in the above manufacturing process steps for hydrogen-induced cracking resistant cold-rolled hot-dip galvanized ultra-high-strength dual phase steel in Example 1-7.

**Table 2-1.**

| No. | Step (2) | | | | Step (4) | Step (5) | |
|---|---|---|---|---|---|---|---|
| | slab heating temperature (°C) | thermal insulation time (h) | final rolling temperature (°C) | coiling temperature (°C) | cold rolling reduction (%) | heating rate V1 (°C/s) | soaking temperature T1 (°C) |
| Ex. 1 | 1260 | 3 | 900 | 580 | 55 | 8 | 780 |
| Ex. 2 | 1280 | 4 | 900 | 700 | 60 | 15 | 800 |
| Ex. 3 | 1250 | 4 | 880 | 650 | 57 | 7 | 820 |
| Ex. 4 | 1190 | 2 | 890 | 630 | 40 | 17 | 810 |
| Ex. 5 | 1230 | 3 | 920 | 650 | 66 | 10 | 825 |
| Ex. 6 | 1270 | 2 | 900 | 620 | 50 | 12 | 790 |
| Ex. 7 | 1260 | 4 | 890 | 600 | 60 | 15 | 775 |

**Table 2-2.**

| No. | Step (5) | | | | | | step (6) | | | | | |
|---|---|---|---|---|---|---|---|---|---|---|---|---|
| | soaking thermal insulatio n time t1 (s) | cooling rate V2 (°C/s) | interme diate tempera ture T2 (°C) | cooling rate V3 (°C/s) | galvaniz ing tempera ture T3 (°C) | insulatio n time for galvaniz ing t3 (s) | cooling rate of fast cooling of the galvaniz ed steel plate (°C/s) | final tempera ture of fast cooling (°C) | insulatio n tempera ture (°C) | insulatio n time (s) | cooling rate for cooling to room temperatu re (°C/s) | thicknes s of the galvaniz ed layer on one side of the substrat e (µm) |
| Ex. 1 | 90 | 3 | 680 | 30 | 490 | 35 | 30 | 200 | 200 | 80 | 10 | 50 |
| Ex. 2 | 70 | 8 | 670 | 15 | 500 | 40 | 40 | 180 | 250 | 20 | 20 | 70 |
| Ex. 3 | 60 | 13 | 760 | 40 | 500 | 70 | 20 | 170 | 180 | 100 | 15 | 35 |
| Ex. 4 | 120 | 10 | 650 | 20 | 410 | 90 | 15 | 170 | 200 | 100 | 45 | 80 |
| Ex. 5 | 40 | 16 | 710 | 55 | 430 | 110 | 35 | 160 | 250 | 60 | 15 | 130 |
| Ex. 6 | 160 | 5 | 680 | 30 | 490 | 100 | 43 | 190 | 200 | 40 | 70 | 60 |
| Ex. 7 | 210 | 4 | 620 | 15 | 460 | 90 | 50 | 160 | 200 | 30 | 30 | 55 |

It should be noted that in the above-mentioned manufacturing process, before the manufactured substrate was galvanized, in order to analyze the microstructure of the substrate, the inventor would separately sample the substrate of each example, and observe and analyze the microstructures of the substrate samples manufactured in Example 1-7 through a metallographic microscope and a transmission electron microscope (TEM), and the relevant observation and analysis results were listed in Table 3 below.

Table 3 lists the observation and analysis results of the microstructure of the substrate of the hydrogen-induced crack-resistant cold-rolled hot-dip galvanized ultra-high-strength dual phase steels in Example 1-7.

**Table 3.**

| No. | microstructure | the volume phase fraction of ferrite (%) | the size of carbide precipitate phase (nm) |
|---|---|---|---|
| Ex. 1 | the matrix is ferrite + martensite, and further comprises carbide precipitate phase | 30 | 30 |
| Ex. 2 | the matrix is ferrite + martensite, and further comprises carbide precipitate phase | 20 | 20 |
| Ex. 3 | the matrix is ferrite + martensite, and further comprises carbide precipitate phase | 35 | 70 |
| Ex. 4 | the matrix is ferrite + martensite, and further comprises carbide precipitate phase | 40 | 50 |
| Ex. 5 | the matrix is ferrite + martensite, and further comprises carbide precipitate phase | 32 | 45 |
| Ex. 6 | the matrix is ferrite + martensite, and further comprises carbide precipitate phase | 37 | 35 |
| Ex. 7 | the matrix is ferrite + martensite, and further comprises carbide precipitate phase | 35 | 15 |

As shown in Table 3 above, in the present disclosure, the matrix of the microstructure of the manufactured substrate of Example 1-7 was ferrite + martensite, and its microstructure further comprises a carbide precipitate phase with a size between 15 and 70 nm. The volume phase fractions of ferrite in the substrate microstructure of Example 1-7 are between 20% and 40%. It was observed that in the substrates of Example 1-7 manufactured by the present disclosure, the carbide precipitate phase was in a co-lattice or semi-lattice state with the matrix.

Correspondingly, after completing the above-mentioned observation and analysis of the microstructure, in order to further illustrate that the hydrogen-induced cracking resistant cold-rolled hot-dip galvanized ultra-high-strength dual phase steel manufactured in Example 1-7 of the present disclosure has excellent properties, the inventor further sampled the hydrogen-induced cracking resistant cold-rolled hot-dip galvanized ultra-high-strength dual phase steels manufactured in Example1-7, and carried out various performance tests on the hydrogen-induced cracking resistant cold-rolled hot-dip galvanized ultra-high-strength dual phase steel samples of Example 1-7, and the relevant test results were listed in Table 4.

The relevant performance testing methods were as follows:
(1) Tensile test: In accordance with GB228.1-2021, a plate tension specimen with a gauge distance of 50mm was used to test and obtain the yield strength, tensile strength and elongation values of the steel in each example at room temperature.
(2) Hydrogen-induced cracking test: according to ISO3690-2012, the diffused H content of the steel obtained by each example was tested. The higher the diffused H content, the lower the hydrogen-induced cracking resistance of the steel, and the higher the risk of delayed cracking. The lower the diffused H content, the higher the steel's resistance to hydrogen-induced cracking, and the lower the risk of delayed cracking.

Table 4 lists the performance test results of hydrogen-induced crack-resistant cold-rolled hot-dip galvanized ultra-high-strength dual phase steels in Example 1-7.

**Table 4.**

| No. | yield strength (MPa) | tensile strength (MPa) | elongation A₅₀ (%) | diffused H content (ppm) |
|---|---|---|---|---|
| Ex. 1 | 900 | 1230 | 9 | 0.08 |
| Ex. 2 | 850 | 1190 | 10 | 0.15 |
| Ex. 3 | 840 | 1250 | 8 | 0.13 |
| Ex. 4 | 870 | 1200 | 11 | 0.14 |
| Ex. 5 | 940 | 1240 | 8 | 0.07 |
| Ex. 6 | 870 | 1260 | 9 | 0.1 |
| Ex. 7 | 860 | 1225 | 10 | 0.13 |

Referring to Table 4, it can be seen that the hydrogen-induced cracking resistant cold-rolled hot-dip galvanized ultra-high-strength dual phase steels obtained in Example 1-7 of the present disclosure all have excellent mechanical properties, and the yield strength is between 840 MPa and 940 MPa, the tensile strength is between 1190 MPa and 1260 MPa, and the elongation is between 8% and 11%.

At the same time, the hydrogen-induced cracking resistant cold-rolled hot-dip galvanized ultra-high-strength dual phase steels designed in Example 1-7 of the present disclosure also have very excellent hydrogen-induced cracking resistance, and the diffused H content is between 0.07ppm and 0.15ppm, and have a good popularization and application prospect.

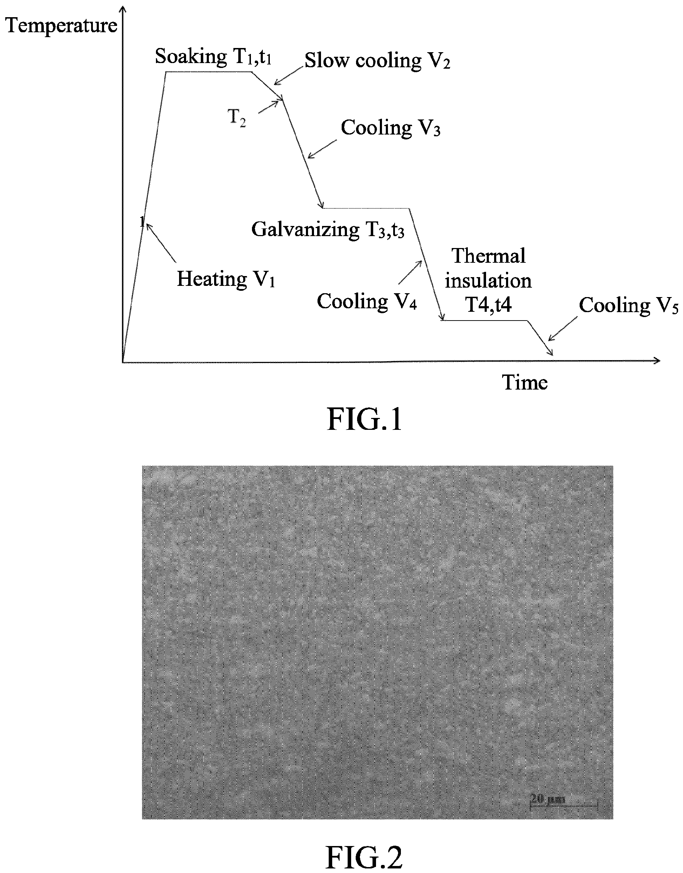

Fig. 1 schematically shows the manufacturing method of hydrogen-induced cracking resistant cold-rolled hot-dip galvanized ultra-high-strength steel described in the present disclosure, which is a schematic diagram of a continuous hot-dip galvanizing recrystallization annealing process and the control process of cooling after galvanizing in one embodiment.

As shown in Fig. 1, in the present disclosure, when carrying out the continuous hot-dip galvanizing recrystallization annealing process, the cold-rolled plate is first heated at the heating rate V1 to the soaking temperature T1 and then thermally insulated for the time period t1, and then the soaking treated steel plate is first slowly cooled to the intermediate temperature T2 at the cooling rate V2, and then immediately cooled to the galvanizing temperature T3 at the fast cooling rate V3 and then thermally insulated for the time period t3. After completing the above steps, the steel plate is fed into the zinc pot for galvanizing.

Correspondingly, after the galvanizing is completed, the steel plate needs to be cooled. The galvanized steel plate is controlled to be quickly cooled to the insulation temperature T4 at the cooling rate V4, and thermally insulated at the insulated temperature for the time period t4, and finally cooled again at the cooling rate V5.

Fig. 2 is a metallographic structure photograph of hydrogen-induced cracking resistant cold-rolled hot-dip galvanized ultra-high-strength dual phase steel in Example 1.

As shown in Figure 2, in this example, the light-colored ferrite volume fraction of the hydrogen-induced crack-resistant cold-rolled hot-dip galvanized ultra-high-strength dual phase steel in Example 1 is about 30%, and at the same time, the microstructure grain is relatively fine due to the grain refinement of microalloying elements.

It should be noted that the combination of the various technical features in the present disclosure is not limited to the combination mode recorded in the claims of the present disclosure or the combination mode recorded in the specific examples, and all the technical features recorded in the present disclosure can be freely combined or combined in any way, unless there is a contradiction between them.

It should also be noted that the examples listed above are only specific examples of the present disclosure. Obviously, the present disclosure is not limited to the above examples, and similar changes or deformations made thereby are directly derived or easily envisaged by those skilled in the art from the contents disclosed in the present disclosure, and should fall within the scope of protection of the present disclosure.

## Claims

1. A cold-rolled hot-dip galvanized dual phase steel, which comprises a substrate and a galvanized layer coated on the substrate, wherein the substrate comprises Fe and unavoidable impurity elements, and the substrate further comprises the following chemical elements in percentages by mass:
C: 0.1 ~0.18%, Mn: 2.2~3.0%, Si: 0.2~0.6%, Al: 0.03~0.3%, Nb: 0.01~0.1%, Ti: 0.01~0.1%, Mo: 0.04~0.2%, B: 0.0005~0.003%;
wherein the matrix of the microstructure of the substrate is ferrite + martensite, and its microstructure further comprises a carbide precipitate phase with a size of less than 100nm.

2. The cold-rolled hot-dip galvanized dual phase steel of claim 1, wherein the percentage by mass of each chemical element of the substrate is:
C: 0.1~0.18%, Mn: 2.2~3.0%, Si: 0.2~0.6%, Al: 0.03~0.3%, Nb: 0.01~0.1%, Ti: 0.01~0.1%, Mo: 0.04~0.2%, B: 0.0005~0.003%; with a balance of Fe and unavoidable impurity elements.

3. The cold-rolled hot-dip galvanized dual phase steel of claim 1, wherein the chemical elements of the substrate further comprise at least one of the following chemical elements in percentages by mass: V: 0.005~0.2%, Cr: 0.01~0.8% and Cu: 0.003~0.5%.

4. The cold-rolled hot-dip galvanized dual phase steel of claim 1, wherein the mass percentage of Si, Al, Mo and Cr in the substrate satisfies: Si + Al + Cr + Mo ≤1.0%.

5. The cold-rolled hot-dip galvanized dual phase steel of claim 1, wherein the mass percentage of P, S, N in the unavoidable impurities of the substrate satisfies: P≤0.02%, S≤0.01 %, N≤0.008%.

6. The cold-rolled hot-dip galvanized dual phase steel of claim 1, wherein the carbide precipitate phase is in a co-lattice or semi-lattice state with the matrix.

7. The cold-rolled hot-dip galvanized dual phase steel of claim 1, wherein the volume phase fraction of ferrite in the microstructure of the substrate is 10~40%.

8. The cold-rolled hot-dip galvanized dual phase steel of claim 1, wherein the thickness of the galvanized layer on one side of the substrate is 5~200µm.

9. The cold-rolled hot-dip galvanized dual phase steel of claim 1, wherein the cold-rolled hot-dip galvanized dual phase steel has a yield strength of ≥ 800MPa, a tensile strength of ≥1180MPa, an elongation A₅₀ of ≥6%, and a diffused hydrogen content of ≤0.2ppm.

10. A manufacturing method of the cold-rolled hot-dip galvanized dual phase steel of any one of claims 1-9, comprising the following steps:
(1) smelting and casting;
(2) hot rolling;
(3) pickling;
(4) cold rolling;
(5) hot-dip galvanizing recrystallization annealing:
(a) the steel plate is heated to a soaking temperature T1 at a heating rate V1 of 1~20 °C/s, and thermally insulated for 30~240s, wherein T1 is > 760 °C;
(b) the soaked steel plate is cooled to an intermediate temperature T2 at a cooling rate V2 of 2~20 °C/s, wherein T2 = 600~780 °C;
(c) the steel plate is cooled at a cooling rate V3 of 5~60 °C/s to a galvanizing temperature T3 and thermally insulated for 20~300s, wherein V3 > V2, and the galvanizing temperature is 400~500 °C;
(d) the steel plate enters the zinc pot for galvanizing;
(6) cooling after galvanizing: after galvanizing, the galvanized steel plate is quickly cooled to ≤200 °C at a rate of ≥10 °C/s, kept in the temperature range of 100~300 °C for 15~100s, and then cooled to room temperature at a cooling rate of ≥5 °C /s.

11. The manufacturing method of claim 10, wherein in the step (2), the slab is heated at 1180~1280 °C, the thermal insulation time is 0.5~4h, the final rolling temperature is controlled to be ≥ 850 °C, and the coiling temperature is controlled to be ≤ 700 °C.

12. The manufacturing method of claim 10, wherein in the step (4), the cold-rolling reduction is controlled to be 30~70%.
